# DEMANDE DE BREVET EUROPEEN

(11) **EP 1 103 921 A1**
(43) Date de publication de la demande: **30.05.2001**
(21) Numéro de dépôt: 00403287.6
(22) Date de dépôt: 23.11.2000
(51) Int. Cl.: G06T 17/20, G06F 19/00, G01V 1/30, E21B 43/00

(54) **Methode pour générer un maillage hybride permettant de modéliser une formation hétérogène traversée par un ou plusieurs puits**

(30) Priorité: 29.11.1999 FR 9915120
(71) Demandeur: INSTITUT FRANCAIS DU PETROLE, 92852 Rueil-Malmaison Cedex (FR)
(72) Inventeur: Bennis, Chakib, 92500 Rueil-Malmaison (FR); Sarda, Sylvain, 92500 Rueil-Malmaison (FR); Pain, Eric, 37600 Perrusson (FR); Balaven, Sophie, 91300 Massy (FR)

(57) **Abrégé**

- Méthode pour générer un maillage hybride permettant de modéliser une formation hétérogène traversée par un ou plusieurs conduits, telle que par exemple une formation souterraine où l'on a foré un ou plusieurs puits dans le but de former un modèle représentatif par exemple d'écoulements de fluides dans ce milieu en accord avec un schéma numérique défini.
- La méthode comporte essentiellement l'association d'un premier maillage structuré pour mailler le milieu hétérogène en respectant ses discontinuités, d'un deuxième maillage structuré de type radial pour mailler une zone autour de chaque conduit ou puits, ce qui permet de mieux respecter des contraintes particulières liées aux écoulements dans cette zone, et des maillages non structurés de transition que l'on interpose entre le premier maillage et chaque deuxième maillage de puits. On combine différents maillages chacun avec ses propres méthodes de formation, de représentation et d'exploration, des maillages structurés avantageux en ce qu'ils facilitent le contrôle et la compréhension des images que l'on forme du gisement et des maillages non structurés plus souples pour réaliser le maillage des zones complexes.
- Applications à des simulateurs de gisements d'hydrocarbures par exemple.

## Description

La présente invention concerne une méthode pour générer un maillage hybride permettant de modéliser une formation hétérogène traversée par un ou plusieurs conduits.

La méthode s'applique particulièrement à la formation d'un maillage adapté à un gisement ou réservoir souterrain traversé par un ou plusieurs puits, dans le but d'y modéliser des déplacements de fluides tels que des hydrocarbures.

### Etat de la technique

La génération de maillage est un élément crucial pour les simulateurs de réservoir de nouvelle génération. Le maillage permet de décrire la géométrie de la structure géologique étudiée au moyen d'une représentation en éléments discrets dans lesquels on effectue la simulation suivant un schéma numérique approprié. Une meilleure compréhension des phénomènes physiques nécessite de simuler en 3D des écoulements polyphasiques dans des structures géologiques de plus en plus complexes, au voisinage de plusieurs types de singularités telles que les stratifications, les failles, les biseaux, les chenaux et les puits complexes. Toute cette complexité doit être prise en compte en premier lieu par le maillage qui doit restituer aussi fidèlement que possible les informations géologiques dans leur caractère hétérogène.

La modélisation de maillage a connu de grands progrès ces dernières années dans d'autres disciplines telles que l'aéronautique, la combustion dans les moteurs, la mécanique des structures, etc. Cependant les techniques de maillage utilisées dans les autres domaines ne sont pas transposables telles quelles dans le monde pétrolier, car les contraintes de métier ne sont pas les mêmes. Par exemple, en simulation de réservoir, les schémas numériques sont construits à partir de volumes de contrôle afin de mieux respecter la conservation de la masse dans le cas d'équations de transport de nature hyperbolique. Le maillage doit être de type dit "block-centered" c'est-à-dire que les noeuds doivent être situés à l'intérieur de chaque couche et les limites de chaque bloc doivent suivre l'interface entre les couches. Or si on ne tenait pas compte de cette contrainte, on placerait naturellement les noeuds le long des failles et le long des limites de stratification. Ceci aurait pour conséquence de faire passer ces interfaces à travers le volume de contrôle utilisé. La saturation, constante dans le volume de contrôle, ne pourrait alors respecter la discontinuité et les résultats seraient imprécis. Il est donc nécessaire de mettre au point de nouvelles techniques mieux adaptées aux besoins pétroliers.

Les maillages cartésiens, couramment employés dans les simulateurs commerciaux actuels, sont mal adaptés à la résolution de ces problèmes nouveaux posés par l'exploitation des gisements pétroliers. Les maillages cartésiens, étant à base d'éléments parallélépipédiques, ne permettent pas de représenter de telles géométries complexes.

On connaît une méthode pour générer des maillages hexaédriques structurés en 3D de type dit CPG (pour Corner-Point-Geometry) qui respecte la géométrie des corps. On la trouve décrite dans le brevet FR 2 747 490 (US 5 844 564) du demandeur et également dans la publication suivante :
- Bennis Ch. et al. « One More Step in Gocad Stratigraphic Grid Génération » : Taking into Account Faults and Pinchouts ; SPE 35526, Stavanger, 1996.

Ce type de maillage offre plus de souplesse que le maillage cartésien car il est constitué d'éléments hexaédriques quelconques pouvant être dégénérés. Il respecte rigoureusement les horizons, les failles et permet de représenter certaines inconformités telles que des biseaux, car sa construction s'appuie sur ces éléments. Toutefois ce type de maillage ne permet pas de résoudre toutes les complexités géométriques comme par exemple des maillages radiaux circulaires autour de puits complexes. Il est possible de réaliser séparément le maillage du gisement et les maillages autour des puits mais il est difficile de représenter plusieurs objets dans un même maillage de gisement de type CPG à cause des problèmes de raccordement liés au caractère structuré du maillage.

Une autre approche est également connue par laquelle on génère automatiquement des maillages 3D uniquement à base d'éléments tétraédriques de Delaunay, avec un raffinement radial circulaire autour des puits. L'avantage d'une telle approche est qu'elle est entièrement automatique et ne nécessite quasiment pas d'intervention de l'utilisateur. Toutefois cette méthode présente des inconvénients qui rendent les résultats obtenus difficilement exploitables :
- le nombre de mailles est en moyenne cinq fois plus grand que celui d'un maillage de type CPG pour une même structure, ce qui est très pénalisant pour les calculs de la simulation ;
- contrairement aux maillages structurés qu'on arrive aisément à visualiser, à explorer de l'intérieur et à modifier localement de façon interactive, il est très difficile et parfois impossible de bien contrôler les maillages tétraédriques à cause de leur taille et surtout du fait de leur caractère non structuré. Ceci pose problème autant pour valider le maillage d'un point de vue géométrique que pour comprendre et valider le résultat d'une simulation sur ce type de maillage.

D'autres approches sont également connues permettant de générer des maillages, notamment des maillages basés sur des volumes de contrôle générés à partir d'une triangulation (Voronoï et CVFE), auxquelles sont associées des techniques d'agrégation des triangles (ou tétraèdres) en quadrangles permettant de réduire le nombre de mailles. Bien que des résultats prometteurs aient été obtenus avec ces nouveaux maillages, la représentation précise de la complexité géologique des réservoirs et des puits reste un sujet de recherche et de développement. En effet, ces maillages sont plutôt 2.5D (c'est-à-dire projetés verticalement) et leur extension en 3D paraît très difficile. Malgré leur aspect hybride, ils restent entièrement déstructurés et seraient donc très difficiles à gérer et à manipuler en vrai 3D. De plus la prise en compte des failles réellement 3D et les puits déviés accentuerait grandement cette difficulté.

### La méthode selon l'invention

La méthode selon l'invention permet de générer un maillage hybride adapté à une formation hétérogène traversé par au moins un conduit de géométrie connue (tel qu'un gisement souterrain traversé par un ou plusieurs puits), dans le but de former un modèle représentatif d'écoulements de fluides dans cette formation en accord avec un schéma numérique défini, la structure de la formation étant connue a priori à partir de données disponibles acquises par des mesures in situ, par des analyses et/ou des interprétations d'images de la formation (des images sismiques par exemple, dans le cas d'un gisement).

La méthode est caractérisée en ce qu'elle comporte l'association d'un premier maillage structuré pour mailler la formation en respectant ses discontinuités, de deuxièmes maillages structurés de type radial pour mailler les zone autour des puits, ces deuxièmes maillages permettant de respecter des contraintes liées aux écoulements dans les puits, et de maillages non structurés de transition entre le premier maillage associé à la formation et les deuxièmes maillages associés aux puits.

Le maillage du milieu hétérogène est obtenu par exemple en important chaque deuxième maillage structuré dans une cavité formée dans le premier maillage structuré, la taille de cette cavité étant suffisante pour que l'on puisse former un maillage de transition non structuré entre le premier maillage structuré associé à la formation et le deuxième maillage structuré associé à chaque puits.

On peut former le maillage non structuré de transition à base de polyèdres quelconques ou des polyèdres canoniques tels que des pentaèdres, tétraèdres, pyramides, etc., en respectant des contraintes liées au schéma numérique

On modélise avantageusement les maillages non structurés de transition avec les maillages structurés de puits, par application d'un formalisme connu en soi dit de « cartes généralisées », le maillage de la formation étant structuré de façon matricielle globalement ou par blocs faillés.

Le maillage hybride global est ainsi obtenu par combinaison de plusieurs types de maillage : un maillage structuré de gisement, un maillage radial autour de chaque puits, également structuré, et des maillages non structurés de transition qui assurent la liaison entre les deux types de maillage précédents. Chacun de ces maillages possède ses propres méthodes de formation, de représentation et d'exploration. Ainsi, on ne dégrade l'aspect structuré qu'aux endroits où c'est strictement nécessaire. Cette approche "objet" offre à la fois l'avantage des maillages structurés pour le contrôle et la compréhension du gisement et la flexibilité des maillages non structurés dans les zones complexes. On n'introduit de la complexité que là où c'est strictement nécessaire. L'indépendance de ces modes de maillage rend possible de ce fait l'extraction, la gestion et la représentation séparée des maillages de puits et des maillages interstitiels inclus dans le maillage du réservoir.

En utilisant un simulateur de gisement d'un type connu, tel que par exemple les simulateurs ATHOS™ ou SCORE™, à un gisement muni d'un maillage hybride obtenu par la méthode, on peut réaliser des simulations de production.

### Présentation des figures

D'autres caractéristiques et avantages de la méthode selon l'invention, apparaîtront à la lecture de la description ci-après d'exemples non limitatifs de mise en oeuvre, en se référant aux dessins annexés où :

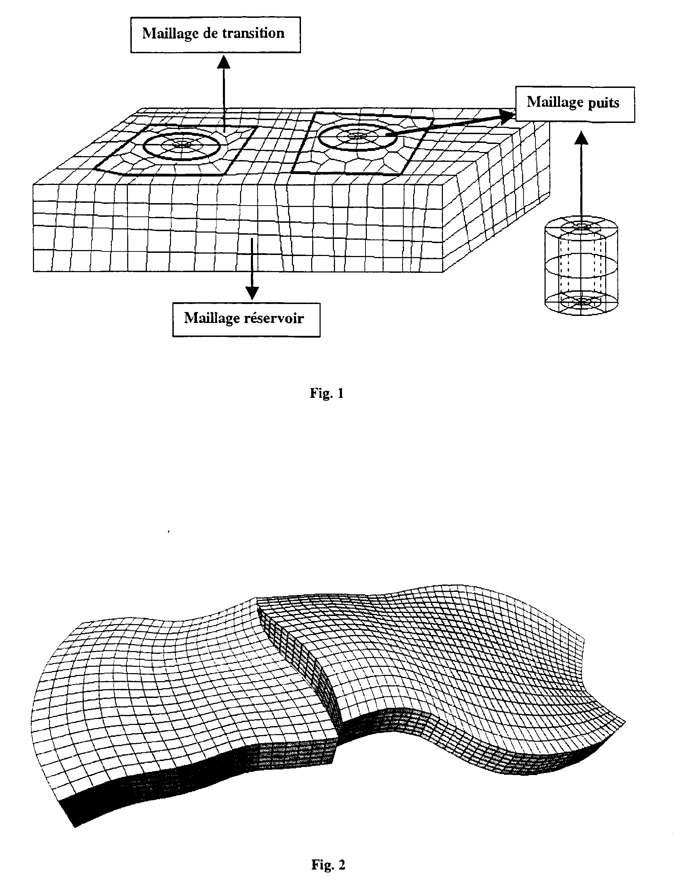

- la Fig.1 montre un exemple schématique de maillage hybride d'un réservoir traversé par deux puits, formé d'un premier maillage structuré pour le réservoir, d'un deuxième maillage structuré pour les zones autour des puits et de maillages de transition entre les deux types de maillage ;
- la Fig.2 montre un exemple de maillage structuré d'un réservoir faillé ;
- la Fig.3 montre un exemple de maillage radial autour d'un puits vertical ;
- la Fig.4 montre un exemple de maillage d'un puits horizontal ;
- la Fig.5 montre en 2,5D, un exemple de réservoir maillé où l'on a ménagé des cavités pour des puits maillés, avant l'étape de création de maillages interstitiels non structurés destinés à les raccorder les uns aux autres ;
- la Fig.6 montre cinq puits pourvus chacun d'un maillage radial, intégrés dans un réservoir maillé, par le biais de maillages de transition non structurés à base de mailles polyédriques quelconques ;
- la Fig. 7 montre séparément le maillage structuré de réservoir avec les cavités qui y sont ménagées pour y inclure les éléments rapportés : puits maillés et maillages interstitiels ;
- les Fig. 8A, 8B, 8C, 8D montrent des maillages élémentaires de puits visualisés individuellement suivant différents modes ;
- les Fig.9A, 9B, 9C, 9D montrent différents maillages élémentaires de transition, visualisés individuellement suivant différents modes, également, permettant leur intégration dans le maillage du réservoir ;
- la Fig.10 montre un exemple de maillage hybride de réservoir avec des maillages de transition formés par exemple de pentaèdres, entre le maillage de réservoir et plusieurs maillages de puits ;
- la Fig.11 montre un modèle pour la représentation matricielle d'un maillage structuré autour d'un puits ;
- la Fig.12 est une représentation graphique d'une liaison entre des brins, dans le cadre de la technique de modélisation dite des « cartes généralisées » servant à générer des maillages non structurés ;
- les Fig.13A, 13B sont des représentations graphiques de liaisons par arcs simples ; et
- les Fig.14A, 14B sont des représentations graphiques de liaisons par arcs respectivement doubles ou triples.

### Description détaillée

La modélisation du gisement est obtenue par une association de maillages élémentaires de types différents. Chaque maillage élémentaire est considéré comme un objet à part entière avec son propre modèle de données, ses propres méthodes de génération et ses propres méthodes de représentation. La génération est faite par étapes avec addition/soustraction de maillages.

1) Pour représenter le gisement global, on utilise par exemple un maillage structuré en i, j, k d'un type connu des spécialistes dit CPG pour « Corner Point Geometry » comme décrit dans le brevet FR 2 747 490 précité. Le réservoir peut être faillé avec glissement d'un bloc par rapport à l'autre. Les horizons et les failles majeurs sont d'abord modélisés par des surfaces continues à partir de données issues d'une interprétation d'images sismiques du sous-sol ou de données obtenues durant des forages (marqueurs aux puits). La structure géologique est ensuite découpée en blocs faillés s'appuyant sur ces surfaces. Ces blocs sont maillés individuellement, puis rassemblés. Pour mailler un bloc, on commence par mailler les surfaces de bord puis on peuple l'intérieur par interpolation transfinie des maillages surfaciques des bords. On applique alors des procédures de relaxation sur les surfaces de bord et à l'intérieur pour harmoniser et régulariser le maillage. Le maillage ainsi obtenu respecte rigoureusement les horizons, les failles et permet de représenter certaines inconformités telles que des biseaux. Il satisfait à toutes les contraintes d'ordre géologique.

2) On dessine de façon synthétique ou on importe une trajectoire de puits. On génère alors un maillage radial structuré autour de chaque puits pour tenir compte des contraintes particulières liés aux écoulements à proximité de ces puits.

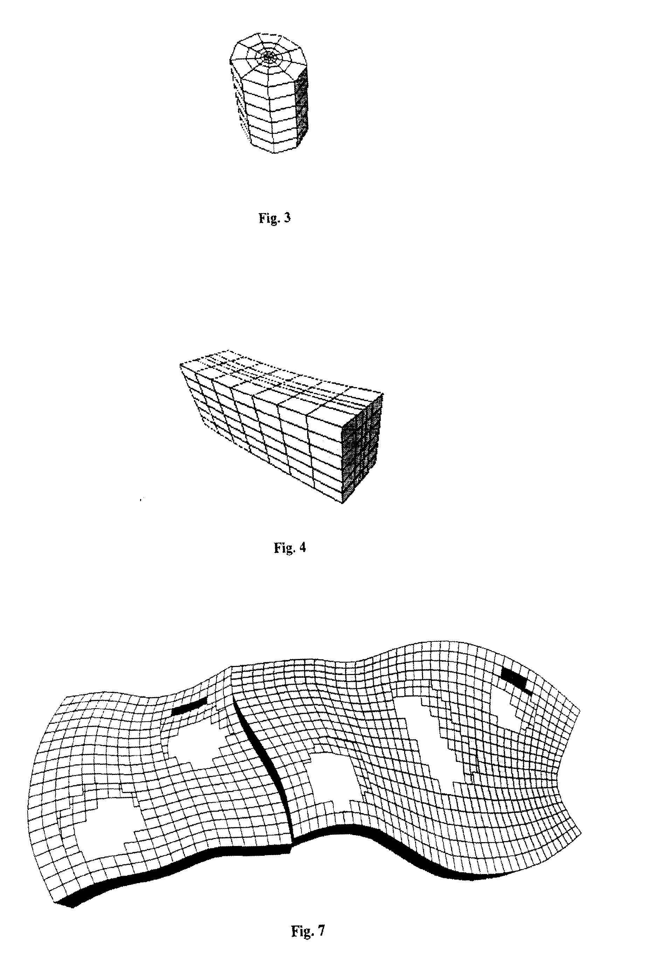

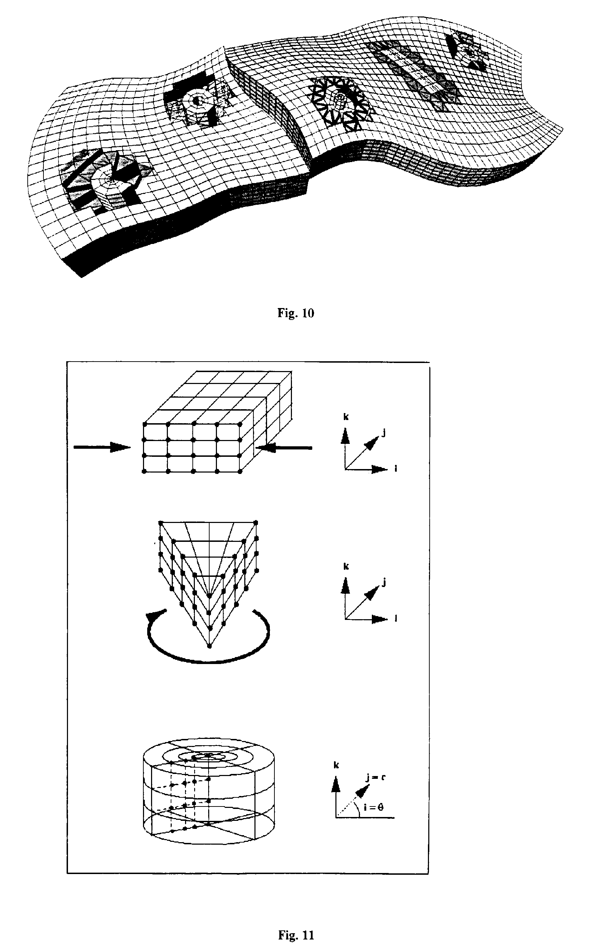

Dans l'exemple représenté à la Fig.3, le maillage structuré autour d'un puits vertical est de type radial circulaire. C'est un maillage de type CPG également. Sa génération consiste dans un premier temps à échantillonner un disque en *r*, θ dans le plan horizontal. Le maillage 2D ainsi obtenu est ensuite projeté verticalement sur les différentes couches du maillage du réservoir. Ici, les i, j, k de la structure matricielle correspondent aux échantillonnages en r, 6 et z respectivement (cf. Fig.11).

Le maillage autour d'un puits horizontal (Fig.4) est structuré en i, j, k, du même type que celui du gisement à la différence qu'un puits ne peut pas être faillé. Il est également obtenu en projetant verticalement sur les différentes couches du maillage de réservoir, un maillage 2D appartenant à un plan horizontal.

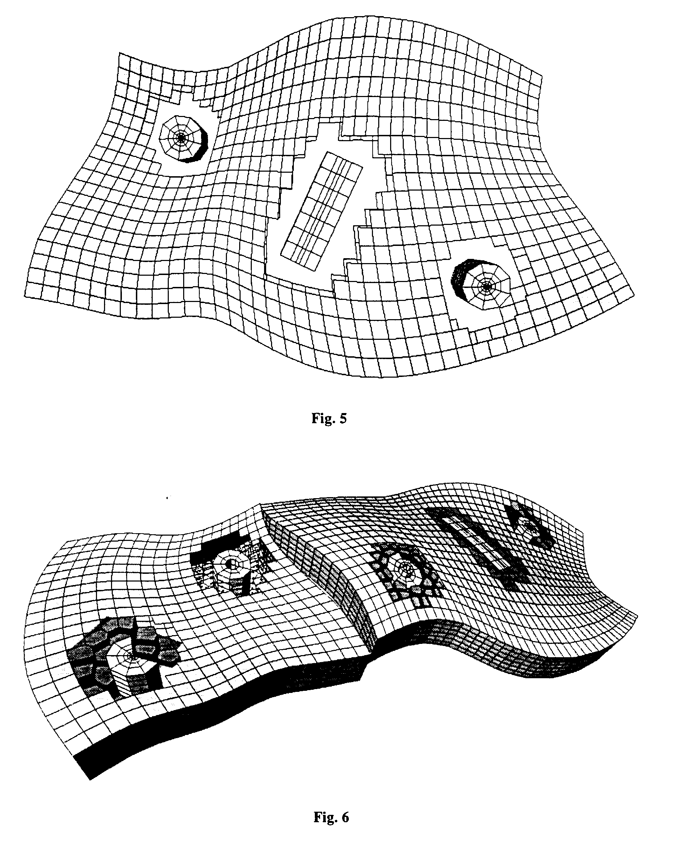

3) Puis, on insère ce maillage radial autour du ou de chaque puits dans le maillage global du réservoir. Pour cela, on crée dans un premier temps une cavité dans le maillage du réservoir en y désactivant toutes les mailles en contact avec des mailles du puits (Fig.5, 6). L'espace dégagé entre le maillage du gisement et le maillage du puits doit être suffisant pour réaliser commodément un maillage de transition. Il peut représenter par exemple environ l'équivalent de deux couches de mailles.

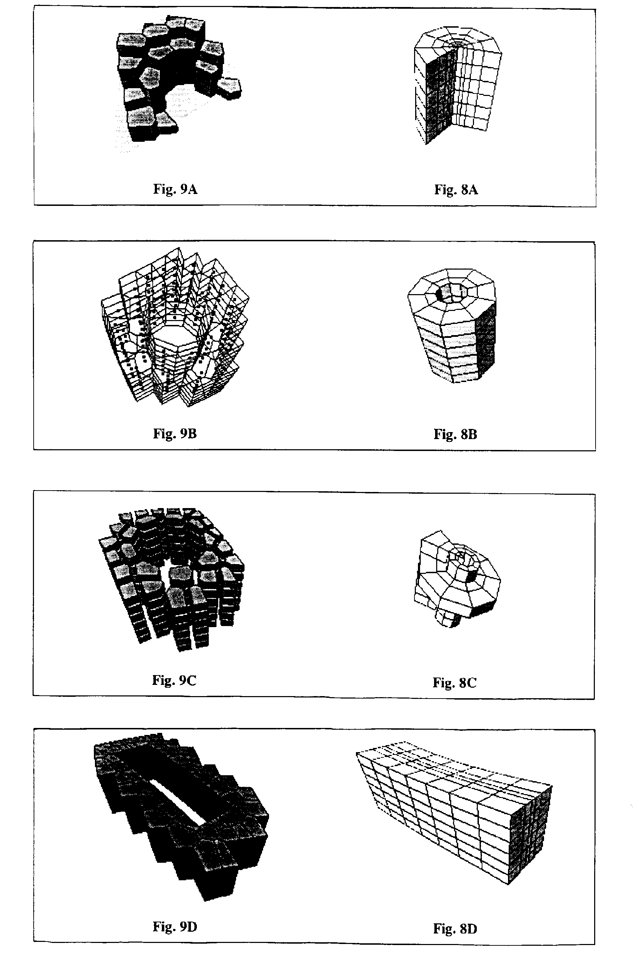

4) On génère ensuite un maillage de transition non structuré dans cette cavité (Fig.7) pour relier le maillage radial structuré autour du puits à celui du réservoir qui respecte au mieux les contraintes liées au schéma numérique. L'utilisateur peut à tout moment revenir désactiver le maillage d'un puits en réactivant les mailles de la cavité correspondante dans le maillage du réservoir.

Le maillage de transition peut être fait par exemple à base de polyèdres avec un nombre quelconque de faces ou de polyèdres canoniques (tétraèdres, pentaèdres, pyramides, etc.) selon le schéma numérique utilisé, sans affecter l'approche globale hybride proposée.

### Exemple de modélisation d'un maillage hybride

Le maillage de réservoir et chaque maillage de puits sont modélisés, pour chaque bloc faillé du réservoir, par des structures matricielles de points ou de cellules comportant chacun huit points. Du fait du caractère structuré des maillages, les liens topologiques entre les différentes mailles sont implicitement contenus dans la structure matricielle.

Les maillages de transition sont plus difficiles à gérer à cause de leur caractère non structuré et du fait qu'ils peuvent contenir des mailles polyédriques dont le nombre de face varie d'une cellule à l'autre.

Une solution avantageuse pour faciliter la gestion de ce nouveau type de maillage et pouvoir le parcourir et y naviguer efficacement, c'est d'utiliser le modèle topologique dit « des cartes généralisées ou G-cartes ». Ce modèle connu des spécialistes est décrit par exemple par :
- Edmond J. : « A Combinatorial Representation for Polyedral Surfaces » Notice Amer. Math. Soc., 7, 1960 ; ou par
- Fortune, S., 1992 : Voronoi diagrams and Delaunay Triangulations. Pages 225-265 of D.Z. Du & F.K. Hwang (eds), *Computing in Euclidean Geometry, 2*^{*nd*} *edn.* Lecture Notes Series on Computing, vol. 4. Singapore : World Scientific.

Les cartes généralisées reposent sur une approche algébrique formelle, que l'on va rappeler brièvement ci-après.

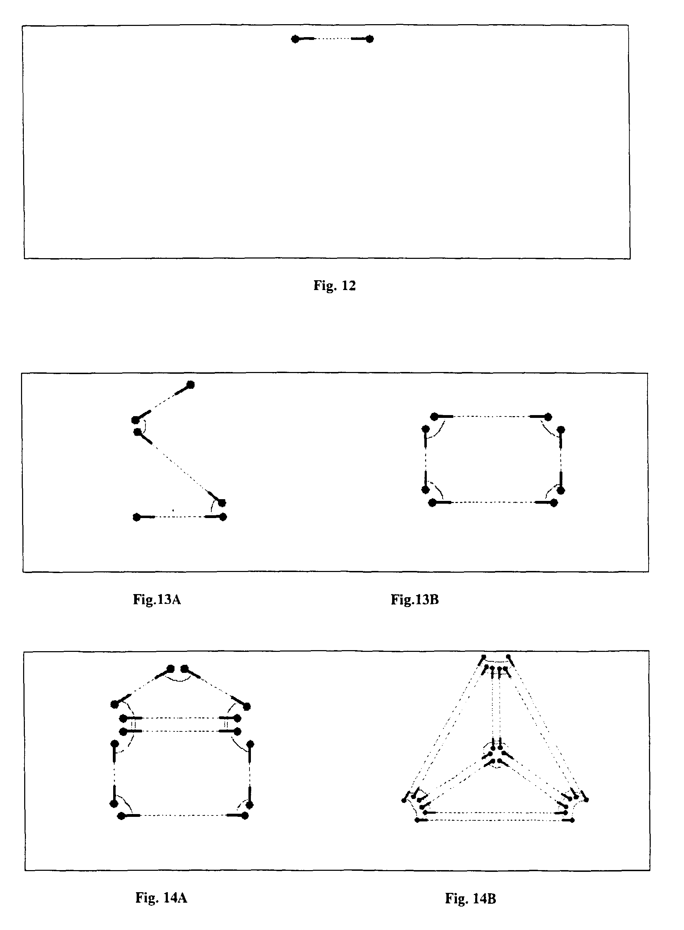

En 3D, les éléments qui constituent une carte généralisée sont (D,α₀, α₁, α₂, α₃) où D est un ensemble fini d'éléments appelés *brins,* et les éléments {αᵢ} sont des fonctions de type involution sur D, associant les *brins* au plus deux par deux, que l'on désigne de ce fait commodément par *liaisons.* Les Fig.11 à 14 montrent des exemples géométriques concrets de représentation. La liaison α_{*0*} est sous la forme d'un segment en pointillé (Fig.11) et les liaisons α_{*1*} α_{*2*} et *α*_{*3*}*,* sous la forme d'arcs, respectivement simples (Fig.12), doubles (Fig.13) et triples (Fig.14).

Suivant une autre approche connue, on considère les cartes généralisées comme des graphes dont les brins forment les noeuds et les liaisons forment les arcs : la liaison α_{*0*} entre deux brins peut être utilisée pour représenter l'arête d'une face, les liaisons α_{1,} pour relier deux arêtes d'une face, les liaisons α_{2,} pour attacher deux faces d'une même cellule, et les liaisons α_{3,} pour coller deux cellules.

Ce modèle de cartes généralisées fait appel à un petit nombre d'objets formels et à une opération permettant, en associant des informations supplémentaires à une topologie, de situer les objets définis dans l'espace et rendre compte de leur apparence, que l'on désigne par plongement, et dans le cas présent, un plongement dans un espace 3D.

Il a l'avantage d'être indépendant de la dimension des objets. Tous les objets sont représentables avec la même structure de données et manipulables avec les mêmes méthodes. Cette approche rend possible la manipulation d'objets créés avec des modèles topologiques hétérogènes. Elle est donc tout à fait adaptée à la mise en oeuvre de la méthode selon l'invention avec son étape de création d'un maillage non structuré de raccordement de deux maillages structurés différents.

L'application du concept des cartes généralisées pour modéliser le maillage de transition, est réalisée par la création d'un certain nombre d'objets de différents types faisant référence les uns aux autres. Ces objets matérialisent le réseau topologique et ses différents plongements dans un espace 3D. De façon concrète, pour permettre la navigation dans le maillage, on construit parallèlement aux données géométriques usuellement manipulées dans un maillage, les points, les arêtes, les faces et les cellules, un réseau topologique. De plus, on établit des liens croisés entre le réseau topologique et données géométriques.

### Objets

Les différents objets manipulés dans le cadre de l'application qui est faite ici de la méthode des cartes généralisées, sont les suivants :
1) L'objet *Maillage Transition* qui contient toute la topologie, la géométrie et les données physiques. Il est constitué d'un objet de type *GCarte* qui représente le réseau topologique, et d'un objet de type *Plongement* qui matérialise le plongement dans le monde physique selon notre application ;
2) L'objet *GCarte*
   Le modèle topologique est contenu entièrement dans un graphe constitué d'une liste *Brins* liés les uns aux autres. Toute opération faite sur la carte généralisée revient à une opération sur le réseau de *Brins.* Le type d'objet *GCarte* possède des méthodes permettant de circuler facilement à l'intérieur du réseau topologique représentant le maillage, c'est à dire de passer d'un *Brin* à un autre.
3) L'objet *Brin*
   Chaque *Brin* est défini par quatre références à d'autres *Brins* (correspondant aux liaisons α₀, α₁ et *α*₃) et par quatre autres références au plongement dans l'espace 3D, notamment à un *Point,* à une *Arête,* à une *Face,* et à une *Cellule* auxquels il est lié.
4) L'objet *Plongement*
   Il est défini par quatre listes :
   - une liste de *Points* (les points du maillage), c'est le plongement de dimension 0 de la *Gcarte ;*
   - une liste *d'Arêtes* (plongement de dimension 1 de la *GCarte*);
   - une liste de *Faces* (plongement de dimension 2 de la *GCarte) ;* et
   - une liste de *Cellules* (plongement de dimension 3 de la *GCarte).*

   L'objet *Plongement* contient également ses propres méthodes de création et de manipulation des données qu'il contient selon l'usage qu'on en fait. Par ailleurs, la *GCarte* est créée à partir de son *Plongement.*
5) L'objet *Point*
   Un *Point* est défini par ses coordonnées x, y, z et d'une liste d'attributs, notamment des valeurs pétrophysiques scalaires ou réelles qui lui sont associés.
6) L'objet *Arête*
   Il est défini par une référence dans la *GCarte* à un *Brin* qui représente une extrémité de l'*Arête.* Ceci fournit un accès privilégié au réseau topologique et permet en même temps de passer du plongement vers le graphe des brins. Par exemple, la liaison α₀ du *Brin* en question mène au *Brin* représentant l'autre extrémité de *l'Arête.* Il est défini en outre par une liste d'attributs, notamment des valeurs pétrophysiques scalaires ou réelles qui lui sont associés.
7) L'objet *Face*
   Ce type d'objet permet de manipuler directement les interfaces entre les cellules ainsi que les faces externes du maillage. Une face est définie par une référence dans la *GCarte* à un *Brin* qui représente un sommet du polygone de bord de la *Face.* Ceci fournit également un accès privilégié au réseau topologique. Les *Brins* représentant les autres sommets du polygone sont accessibles par applications itératives de la relation α₀oα₁ en partant du *Brin* initial jusqu'à retomber sur ce même *Brin.* Il est défini également par une liste d'attributs relatifs à la *Face* (par exemple, des valeurs pétrophysiques scalaires ou vectorielles).
8) L'objet *Cellule*
   Le type d'objet *Cellule* est défini par une liste de références dans la *GCarte* à des *Brins,* chacun étant le représentant d'une *demie-Face* de la *Cellule.* Ceci permet d'accéder au réseau topologique à partir des *Cellules.* Il est défini également par un site (coordonnées du centre de masse de la *Cellule),* et par une liste d'attributs propres à la *Cellule* ou à son site (par exemple, des valeurs pétrophysiques scalaires ou vectorielles).

### Représentation graphique et exploration

La représentation graphique est un moyen très efficace, voire incontournable, pour contrôler et valider la construction d'un maillage et les résultats de simulation sur celui-ci. Pour ce qui concerne la construction, on commence généralement par contrôler visuellement la géométrie du maillage généré. Si ceci n'est pas suffisant, on peut calculer des critères locaux ou globaux de qualité sur lesquels on établit des statistiques et qu'on visualise sur le maillage à.l'aide d'une échelle de couleur. La simulation des écoulements consiste à calculer les variations au cours du temps de certains paramètres pétrophysiques compte tenu des hypothèses qui conditionnent initialement les écoulements. La validation de la simulation passe également par la visualisation de ces paramètres sur le maillage (de préférence à l'aide d'une échelle de couleur). Comme il s'agit de maillages 3D, il est nécessaire de disposer d'outils qui permettent d'explorer le maillage de l'intérieur en y naviguant visuellement. La représentation graphique et la navigation dans les maillages, présentées ci-après, est une bonne illustration de la souplesse et la modularité de l'approche hybride proposée et de l'efficacité et l'adéquation du modèle de donnés choisi.

Le maillage hybride, considéré comme un ensemble d'entités indépendantes : les maillages élémentaires, est constamment visualisé dans une fenêtre principale. A tout moment l'utilisateur peut sélectionner un maillage élémentaire et le visualiser avec ses méthodes spécifiques, dans une fenêtre annexe qui ne contient que le maillage élémentaire sélectionné. Les actions sur le maillage élémentaire sont automatiquement répercutées sur l'ensemble du maillage hybride visualisé dans la fenêtre principale. On peut ainsi visualiser et explorer un maillage élémentaire en tant qu'entité à part entière et avoir une vue de celui-ci dans le contexte global. Les méthodes de visualisation diffèrent selon que le maillage élémentaire est structuré (maillage réservoir et maillages de puits) ou non-structuré (maillages de transition).

### Exemples de fonctionnalités spécifiques aux maillages structurés

Dans le cas d'un maillage structuré (réservoir et puits) la visualisation est simple et classique. Elle peut se résumer à deux grandes fonctionnalités :
- visualisation de l'enveloppe externe du maillage avec la possibilité de l'éplucher dans les 3 directions i, j, k séparément,
visualisation simultanée ou séparée de trois tranches matricielles de cellules i=cste, j=cste et k=cste, avec la possibilité de les déplacer dans le bloc.

### Exemples de fonctionnalités spécifiques aux maillages non structurés

Dans le cas non structuré des maillages de transition, on fait appel de préférence à d'autres modes plus élaborées de visualisation. On utilise essentiellement cinq fonctionnalités :
- visualisation de l'enveloppe externe avec la possibilité d'épluchage concentrique, topologiquement parlant,
- visualisation des cellules traversées par un plan de coupe, orthogonal à un axe de coordonnées x, y, z, ou quelconque,
- visualisation de la trace des cellules sur le plan de coupe,
- visualisation des sites du maillage quand ceux-ci sont donnés en entrée, et
- visualisation des mailles en mode plein ou éclaté.

Bien entendu, pour les deux types de maillage, on a la possibilité de visualiser une propriété ou valeur scalaire à l'aide d'une échelle de couleurs.

Toutes ces fonctionnalités nécessitent de pourvoir parcourir facilement et de façon optimale le maillage non-structuré. Ceci est rendu possible grâce à l'utilisation du formalisme dit des cartes généralisées.

Les images des Fig.7 à 10 illustrent bien tout le potentiel offert par la méthode de maillage hybride proposée, i.e. l'intégration harmonieuse qui peut être réalisée d'un maillage structuré obéissant à un modèle topologique (celui des puits), dans un autre maillage structuré (celui du réservoir) obéissant à un modèle topologique différent, par le biais d'un maillage non structuré de transition. L'indépendance de ces modèles rend possible de ce fait l'extraction et la représentation séparée des maillages de puits et des maillages interstitiels inclus dans le maillage du réservoir, pour représenter, manipuler et explorer ce type de données.

## Revendications

1. Méthode pour modéliser en 3D un maillage hybride adapté à un milieu hétérogène traversé par au moins un conduit de géométrie connue, dans le but de former un modèle représentatif d'écoulements de fluides dans ce milieu en accord avec un schéma numérique défini, la structure du milieu étant connue a priori à partir de données disponibles acquises par des mesures in situ, par des analyses et/ou des interprétations d'images de la formation, comportant l'association d'un premier maillage structuré pour mailler la formation en respectant ses discontinuités et d'un deuxième maillage structuré de type radial pour mailler une zone autour de chaque puits, ce deuxième maillage permettant de respecter des contraintes liées aux écoulements dans les puits, caractérisée en ce que l'on incorpore entre le premier maillage et le deuxième maillage, un maillage non structuré de transition modélisé par application du procédé dit de carte généralisée.

2. Méthode selon la revendication 1, caractérisée en ce que l'on importe le deuxième maillage structuré dans une cavité formée dans le premier maillage structuré, de taille suffisante pour que les deux maillages structurés soient disjoints, le maillage non structuré de transition étant formé en respectant des contraintes liées au dit schéma numérique, le premier maillage étant structuré de façon matricielle globalement ou par blocs faillés.

3. Méthode pour simuler en accord avec un schéma numérique défini, l'évolution d'un processus tel que des écoulements de fluides, dans un milieu hétérogène traversé par au moins un conduit ou puits de géométrie connue, la structure de la formation étant connue a priori à partir de données disponibles acquises par des mesures in situ, par des analyses et/ou des interprétations d'images de la formation, dans laquelle on utilise un premier maillage structuré pour mailler la formation en respectant ses discontinuités et un deuxième maillage structuré de type radial pour mailler une zone autour de chaque puits, ce deuxième maillage permettant de respecter des contraintes liées aux écoulements dans les puits, caractérisée en ce qu'elle comporte :
- l'incorporation entre le premier maillage et le deuxième maillage, un maillage non structuré de transition modélisé par application du procédé dit de carte généralisée ; et
- la résolution du schéma numérique dans le maillage réalisé sur le milieu pour simuler le processus.
